# EUROPEAN PATENT APPLICATION

(11) **EP 4 005 377 A1**
(43) Date of publication of application: **01.06.2022**
(21) Application number: 20210711.6
(22) Date of filing: 30.11.2020
(51) Int. Cl.: A01K 47/00, A01K 55/00

(54) **PEDAGOGICAL AND SCIENTIFIC DEVICE FOR SOLITARY BEE NESTING TO EVALUATE THE QUALITY OF THE ENVIRONMENT**

(71) Applicant: BeeOdiversity, 1150 Bruxelles (BE)
(72) Inventor: VAN CUTSEM, Michaël, 1310 La Hulpe (BE); NGUYEN, Bach Kim, 5060 Sambreville (BE)
(74) Representative: Calysta NV

(57) **Abstract**

Method for analysing solitary bees in an environment comprising the following steps:
providing a device for solitary bee nesting (10) in the environment (S0), wherein the device for solitary bee nesting (10) comprises a plurality of nest holes (1), wherein the plurality of nest holes (1) comprise at least two different groups (2) of nest holes (1), wherein each group (2) of nest holes (1) comprise a plurality of nest holes (1), wherein each nest hole (1) of the same group (2) has the same diameter, wherein the nest holes (2) of different groups (2) distinguish in their diameter,
determining an occupancy information per group (2) of nest holes (1) (S1);
determining a presence information about the presence of different solitary bee species in the environment based on the occupancy information.

## Description

### Technical Field

The present invention relates to a device for solitary bees nesting, a method and system for analysing solitary bees, in particular to analyse the quality of the environment based on the analysis of the solitary bees.

### Prior art

The principal economic focus in apiculture lays on honeybees. Honeybees are used to produce honey and/or pollen. Solitary bees on the other side have a reduced economic importance compared to honeybees and are often neglected. Solitary bees play however an important role in pollination of plants. So, it would be interesting to study solitary bees better and to help solitary bees to reproduce in an environment. Therefore, there exist devices for solitary bee nesting or so-called insect hotels or bee hotels which provide the solitary bees with nest holes.

Examples of such insect hotels can be found in US2018/0255748 or US7959486 which provide in a massive wooden structure a plurality of nest holes with equal or different diameters. Such insect hotels might be good to provide the solitary bees with nest holes, but they are not very convenient to study the solitary bees in an environment and their relationship with this environment. Due to the massive structure, they are either heavy. US6364738 discloses an insect hotel with a hollow box structures with nest holes being realized as tubes extending between the front wall and the back wall. This structure is much lighter than the massive devices for solitary bee nesting described before. However, the device for solitary bee nesting provides only one diameter for the tubes and can thus host only solitary bee species corresponding to the one diameter of the tubes.

DE29814913 discloses nesting structure for solitary bees with each nest hole being removable and having at least one transparent wall such that the activity in the nest hole can be studied. However, also this structure is limited to solitary bees having the same diameter as all nest holes have the same nest hole diameter.

For beehives and honeybees, there are also more developed solutions like in WO2020/162926 which automatically counts a bee each time it enters and/or exits from the beehive. The data can be sent automatically with a wireless radio communication to a server.

### Brief summary of the invention

It is the object of the invention to solve the problems of the state of the art, in particular to provide an improved device for solitary bee nesting which allows to study solitary bees and/or the environment in which the solitary bees live.

According to one embodiment of the invention, this object is solved by a method for analysing solitary bees in an environment, preferably their diversity in the environment comprising the following steps: providing a device for solitary bee nesting in the environment, wherein the device for solitary bee nesting comprises a plurality of nest holes, wherein the plurality of nest holes comprise at least two different groups of nest holes, wherein each group of nest holes comprise a plurality of nest holes, wherein each nest hole of the same group has the same diameter, wherein the nest holes of different groups distinguish in their diameter; receiving an occupancy information per group of nest holes; and determining a presence information about the presence of different solitary bee species in the environment based on the occupancy information.

According to one embodiment of the invention, this object is solved by a device for solitary bee nesting for solitary bees comprising a plurality of nest holes, wherein the plurality of nest holes comprise at least two different groups of nest holes, wherein each group of nest holes comprise a plurality of nest holes, wherein each nest hole of the same group has the same diameter, wherein the nest holes of different groups distinguish in their diameter.

The object is further solved by a system comprising a device for solitary bee nesting as described above and a processing means, wherein the processing means is configured to: receiving an occupancy information per group of nest holes; and determining a presence information about the presence of different solitary bee species in the environment based on the occupancy information.

According to one embodiment of the invention, this object is solved by a software comprising a plurality of instructions configured, when executed on the processing means, to perform the following steps: receiving an occupancy information per group of nest holes of a device for solitary bee nesting, wherein the device for solitary bee nesting comprises a plurality of nest holes, wherein the plurality of nest holes comprise at least two different groups of nest holes, wherein each group of nest holes comprise a plurality of nest holes, wherein each nest hole of the same group has the same diameter, wherein the nest holes of different groups distinguish in their diameter; and determining a presence information about the presence of different solitary bee species in the environment based on the occupancy information.

Bee species of different size use different nest holes of different diameters. By having a plurality of nest holes of the same diameter in each group, the occupancy information per group gives an information about the presence of the bee species of the size corresponding to the diameter of the nest holes of this group. Thus, with a device for solitary bee nesting with n groups with n different diameters of the nest holes of these groups, at least n bee species can be distinguished and their frequency in the environment can be determined. Thus, the present method, system, software and device for solitary bee nesting allows to analyse the presence of different bee species in the environment of the device for solitary bee nesting. This provides a very simple and effective method to detect the presence of different bee species in an environment. This presence information can be used for many purposes like to determine the capacity of the environment to host these solitary bees in terms of feeding.

According to one embodiment of the invention, this object is solved by a method for analysing solitary bees in an environment comprising the following steps: providing a device for solitary bee nesting in the environment, wherein the device for solitary bee nesting comprises a plurality of nest holes; waiting until at least one solitary bee has filled at least one nest hole of the plurality of nest holes with eggs and provisions and has closed the filled at least one nest hole with a nest closure; removing at least one of the nest holes which is closed by the nest closure; analysing the content of the at least one removed nest hole; and determining an environment information about the plants (from which the provisions come from) and/or the environmental pollution in the environment based on the analysed content of the at least one removed nest hole.

According to one embodiment of the invention, this object is solved by a device for solitary bee nesting comprising a plurality of nest holes, wherein the nest holes of the plurality of nest holes are removable (for analysing the content of the nest hole).

The removable nest holes allow to select some of the full nest holes to remove for analysing their content. Thus, the remaining full nest holes can be kept in the device for solitary bee nesting so that the new solitary bees can continue their life cycle. Just some nest holes are removed to be analysed. Due the removal of the complete nest hole which already is naturally closed by the solitary bee, the content of the nest hole can easily be brought or sent to a laboratory for analysing its content. The method allows to analyse the content of the nest hole which has been collected by the solitary bees from all over the environment around the device for solitary bee nesting. Thus, the content of the nest hole is a very representative sample of the environment itself. The analysis result of the content of the nest hole provides thus a reliable information about the plants and the environmental pollution in the environment.

The dependant claims refer to further advantageous embodiments.

In one embodiment, the different solitary bees comprise at least one bee species per group, wherein the information about the presence of the at least one solitary bee species per group is determined based on the occupancy information of this group. Thus, with a device for solitary bee nesting with n groups, n bee species can be distinguished.

In one embodiment, the occupancy information per group of nest holes has been taken at a certain occupancy sample time, wherein the information about the presence of different solitary bee species is determined further based on the occupancy sample time. This allows further to distinguish different bee species nesting in the same group of nest holes 1 but at different time periods of the year.

In one embodiment, the occupancy information of a group of nest hotels comprises the occupancy state of each nest hole of this group. This information allows to compute all other information needed.

In one embodiment, the presence information comprises for at least two bee species an information about their presence in the environment.

In one embodiment, the presence information of the different bee species includes the quantification and/or proportion of nest holes of the different bee species.

In one embodiment, the different bee species are different groups of bee species, like different bee families. In another embodiment, the different bee species distinguish in specific bee species.

In one embodiment, a processing means receives the occupancy information per group of nest holes and determines the presence information.

In one embodiment, the processing means comprises a client means and a server means, wherein the client means receives the occupancy information per group of nest holes, wherein the server means determines the presence information based on the occupancy information received at the client means.

In one embodiment, the client means comprises a camera, wherein the occupancy information per group of nest holes is received from an image of the plurality of nest holes captured by the camera of the client means. Preferably, the image shows the entrances of the nest holes.

In one embodiment, a user enters the occupancy information per group of nest holes via a user interface of the client means.

In one embodiment, the method comprises the step of determining an environment information about the biodiversity and/or the environmental pollution based on the presence information.

In one embodiment, the method comprises the steps of: analysing the content of at least one of the nest holes; and determining, based on the analysed content, the presence information and/or the environmental information.

In one embodiment, the plurality of nest holes comprises preferably four different groups of nest holes.

In one embodiment, the at least two groups have two or more different nest hole diameters selected each from a different one of the following diameter ranges: a first diameter range smaller than or equal to 5 mm, a second diameter range between 5 mm and 8 mm, a third diameter range between 7 mm and 9 mm and a fourth diameter range larger or equal than 9mm. In a preferred embodiment, the at least two groups comprise three of the listed diameter ranges, preferably four of them. These four diameter ranges proved to be very valuable as they cover many solitary bees at different times of the year.

In one embodiment, at least some, preferably all of the nest holes or tubes are transparent. This allows to check what happens inside the nest hole.

In one embodiment, at least some, preferably all of the nest holes are removable. This allows to remove the nest holes for analysing the content of the nest holes.

In one embodiment, the distance between neighbouring nest holes is at least 3 cm, preferably at least 4 cm, preferably at least 4,5 cm.

In one embodiment, the (removable) nest holes are realized as tubes.

In one embodiment, the device for solitary bee nesting comprises a plurality of nest hole supports each configured to hold one nest hole or tube. The nest hole support is preferably a hole in a wall (including also the door) of the device for solitary bee nesting and the tube is inserted in the hole to support the nest hole/tube in the device for solitary bee nesting. Thus, the nest hole/tube can be easily removed from and/or installed in the nest hole support. In this case, the diameter of the nest hole is provided preferably by the inner diameter of the removable tube.

In one embodiment, the nest holes or tubes are realised transparent. This allows to check what happens in the nest holes without disturbing the bees in it, for example to count the number of larvae.

In one embodiment, the tubes are closed at the back end by a closure means. The closure means is preferably made of a breathable material, preferably made of cork.

In one embodiment, the tubes are open at the back end. This allows the solitary bees to build their own closure at the back end which could improve the ventilation of the nest hole.

In one embodiment, the plurality of nest holes comprise a plurality of first nest holes (first group) each having a first diameter, wherein the plurality of nest holes comprises a plurality of second nest holes (second group) each having a second diameter, wherein the second diameter being larger than the first diameter. Preferably, the plurality of nest holes comprises a plurality of third nest holes each having a third diameter, wherein the third diameter being larger than the second diameter. Preferably, the plurality of nest holes comprises a plurality of fourth nest holes each having a fourth diameter, wherein the fourth diameter being larger than the third diameter.

In one embodiment, the plurality of nest holes comprise a plurality of first nest holes (first group) each comprising a first entrance having a first diameter, wherein the plurality of nest holes comprises a plurality of second nest holes (second group) each comprising a second entrance having a second diameter, wherein the second diameter being larger than the first diameter. Preferably, the plurality of nest holes comprises a plurality of third nest holes each comprising a third entrance having a third diameter, wherein the third diameter being larger than the second diameter. Preferably, the plurality of nest holes comprises a plurality of fourth nest holes each comprising a fourth entrance having a fourth diameter, wherein the fourth diameter being larger than the third diameter.

In one embodiment, at least some, preferably all of the nest holes are removable and the plurality of nest holes comprise different groups of nest holes, wherein each group of nest holes comprise a different diameter of the nest holes, wherein at least one nest hole of each group is removed and analysed. The different groups of nest holes allow different solitary bee species collect pollen. Since different solitary bee species prefer different plants, the content of the nest holes of different groups, i.e. of different bee species is more representative of the environment. Thus, the analysis of the content of the nest holes of different groups is improved and the environment information is better.

In one embodiment, the presence information retrieved from the occupancy information and the analysis result from the content of the removed nest holes is combined to get an improved presence information or an improved environment information. While the occupancy information provides more information about the quantity of different solitary bees present in the environment, the analysis of the content gives an independent information about the different plants and/or contaminants present in the environment.

Thus, the combination of a device for solitary bee nesting with a plurality of groups each having a plurality of nest holes of the same diameter with removable nest holes allows a very advantageous effect. In particular the pollen content of the nest holes of different groups are different and complementary so that the analysis of different nest holes is more complete than the analysis of nest holes of the same group.

In one embodiment, the plurality of nest holes comprise at least two different groups of nest holes, wherein each nest hole of the same group has the same diameter, wherein the nest holes of different groups distinguish in their diameter, wherein at least one nest hole of each group is removed and analysed.

In one embodiment, each group of nest holes comprise a plurality of nest holes, wherein an occupancy information per group of nest holes is determined, and a presence information about the presence of different solitary bee species in the environment is determined based on the occupancy information, and the environment information is further based on the presence information.

In one embodiment, the pollen of the at least one removed nest hole is analysed to determine the plant species present in the environment. Since the pollen and/or nectar contain traces of all plants the solitary bee has visited in the environment, the analysis of the pollen allows to identify all plants represented in the pollen.

In one embodiment, the content of the at least one removed nest hole is analysed by DNA or microscopic analysis (palynological analyses). Palynological analyses allow to identify all types of plants of the environment represented in the pollen.

In one embodiment, the content of the at least one removed nest hole is analysed to detect at least one contaminant, wherein based on the detected at least one contaminant the environmental pollution is determined. Since, the pollen and/or nectar contained in the nest holes represent a sample of all plants visited by the solitary bee, it provides a very good indicator of the contaminants present in the environment.

In one embodiment, a plurality of devices for solitary bee nesting are placed at different locations, wherein for each device for solitary bee nesting, at least one closed nest hole is removed and analysed, wherein, for each device for solitary bee nesting, the environment information is determined based on the analysed content of the removed at least one closed nest hole, wherein the environment information of a device for solitary bee nesting comprises comparison information with the environment information of one or more of the other devices for solitary bee nesting. This allows to put the environment information in relation with the environment information of a neighbouring and/or distant environment.

In one embodiment, a structure, wherein the structure comprises a plurality of nest hole supports each for holding one of the plurality of nest holes, wherein each of the plurality of nest holes is realised as a tube protruding from the structure, preferably into the interior of the structure being hollow. Compared to nest holes realised in massive wood, this structure is much lighter and allows to remove the nest holes/tubes quite easily. The removed tubes are light and good to handle.

In one embodiment, the plurality of nest holes comprises at least two different groups of nest holes, wherein each nest hole of the same group has the same diameter, wherein the nest entrances of different groups distinguish in their diameter.

In one embodiment, the nest hole supports are realised as through holes in the structure in which the tubes are inserted. This is a very simple and stable construction. In addition, the tube opening is directly used as nest entrance so that the nest closure will be built in the tube. Thus, the nest closure will stay in the tube, when the tube is removed.

In one embodiment, each of the plurality of nest holes has a depth between 12 cm and 22 cm, preferably between 15 cm and 19 cm. The length defines how many eggs can be placed in the nest hole. This length proved to be a good compromise to have enough content in the nest hole for a complete analysis without affecting too many eggs. In addition, it provides a good ratio between male and female bees as in each nest hole one male egg is placed, while the remaining eggs are for female bees.

Other embodiments according to the present invention are mentioned in the appended claims and the subsequent description.

### Brief description of the Drawings

Figure 1 shows a front view of an embodiment of a device for solitary bee nesting according to the invention.
Figure 2 shows the cross-sectional view of the device for solitary bee nesting of Fig. 1 along line II-II.
Figure 3 shows the cross-sectional view of the device for solitary bee nesting of Fig. 1 along line III-III.
Fig. 4 shows a full nest hole 1 fixed in the nest hole support.
Fig. 5 shows the full nest hole 1 removed from its nest hole support.
Fig. 6 shows a system according to the invention.
Fig. 7 shows an embodiment of a first method according to the invention.
Fig. 8 shows an embodiment of a second method according to the invention.

In the drawings, the same reference numbers have been allocated to the same or analogue element.

### Detailed description of an embodiment of the invention

Other characteristics and advantages of the present invention will be derived from the non-limitative following description, and by making reference to the drawings and the examples.

Bees can be classified in the group of domestic bees and the group of solitary bees, often also called wild bees. One solitary bee nests normally alone in one nest hole. The present invention is for solitary bees, in particular for cavity nesting bees. Each female solitary bee lays 20 to 30 eggs during her life. When a bee finds a nest hole (cavity) she will collect materials to create the cell for her first egg: a ball of pollen stuck together with nectar for each larvae to eat until it develops into an adult bee. The female solitary bee places the ball inside the cell and lays an egg on top, leaving space for the larvae to grow into an adult bee. She builds a partition wall and repeats the process until the whole nest hole / cavity / tube is filled, leaving a space at the entrance of the tube empty before closing it off with a nest closure and moving on to another nest hole. Solitary bees spend their early months hidden in the nest growing. They then spend the winter as a cocoon (or pupa) before emerging the following spring or early summer as adults. Once the adult bees have mated, the female looks for a suitable nest and the cycle repeats itself. Depending on the bee species, the time period of occupying nest holes, preparing the nest holes with pollen and laying the egg vary between spring and summer. Depending the bee species, the (female) solitary bee selects a nest holes based on the diameter (of the entrance) of the nest hole. Different bee species or bee geni have different preferences for plants from which they collect pollen and nectar. They use also different material as a building material for the partition wall and/or for nest closure of the nest hole, when it is full.

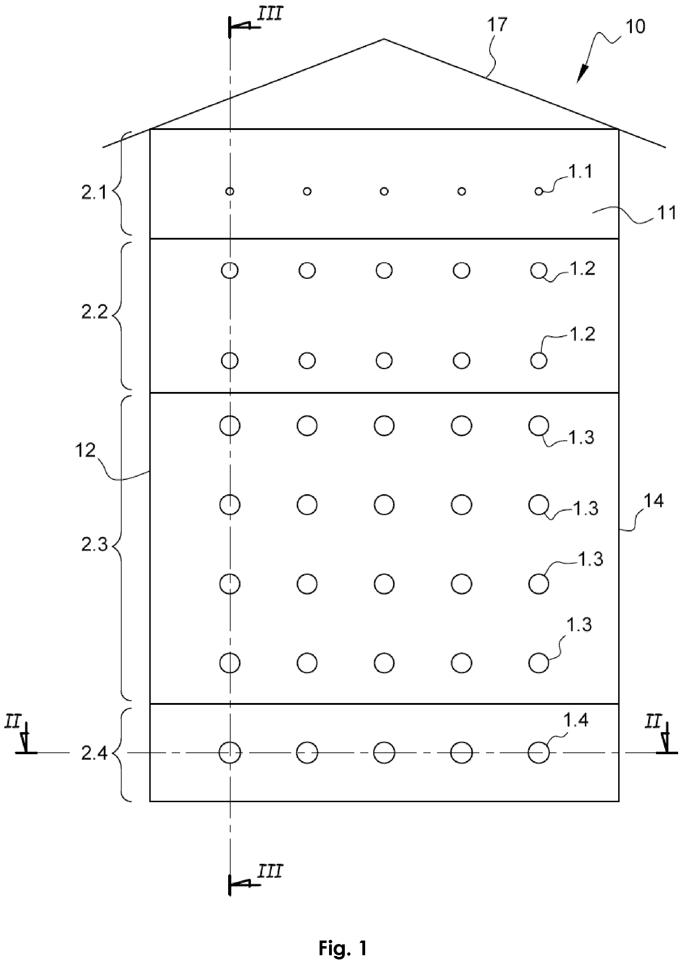

Fig.1 to 3 show an exemplary embodiment of a device for solitary bee nesting 10. Subsequently, the device for solitary bee nesting 10 is shortly called bee hotel 10.

The bee hotel 10 is particularly designed for one or more of the species of the following bee geni: Osmia (i.e. mason bee), Megachile (i.e. leafcutter bees), Heriades, Anthidium (i.e. wool carder bee). Bees of those four geni/families are present all over Europe and guarantee thus a wide applicability of the bee hotel. Outside of Europe, the bee hotel can be easily adapted based on the bee geni/families present in the territorium of application or simply the same holes are used for different bee species. Bees of the genus Osmia host or nest in nest hole diameters between 5 and 10 millimetre (mm) and are active from early spring to summer. Bees of the genus Megachile host in nest holes diameters between 6 and 8 mm and are active in spring and summer. Bees of the genus Heriades host or nest in nest hole diameters between 3 and 4 mm and are active in summer. Bees of the genus Anthidium host or nest in nest hole diameters between 10 and 15mm and are active in summer and autumn. The previous selection allows to use the bee hotel 10 over almost the whole bee season which is from spring to summer.

The bee hotel 10 comprises preferably a structure. Preferably, the bee hotel 10 is realized as a hollow structure with walls. Preferably, the bee hotel 10, in particular its hollow part has a substantially rectangular shape (not considering the roof 17). Preferably, the walls comprise a front wall 11, two side walls 12 and 14, a back wall 13, a bottom wall 15 and/or a top wall 17. The front wall 11 is preferably parallel to the back wall 13 and/or perpendicular to the side walls 12, 14 or to the bottom wall 15. The side wall 12 or 14 is preferably parallel to respective other side wall 14 or 12 and/or perpendicular to the front wall 11, the back wall 13 or to the bottom wall 15. The bottom wall 15 is preferably perpendicular to the front wall 11, the back wall 13 or to the side walls 12 or 14. The top wall is here realized as a roof 17. The roof has preferably an inclination with respect to the bottom wall 15 or the horizontal plane so that the bee hotel 10 is protected from rain. Here the roof 17 is realized as a triangular roof. The walls 11, 12, 13, 14, 15 are preferably flat and/or straight walls. It is understood that the walls can be arranged differently and/or be formed differently. The walls 11-17 are in one embodiment made of wood. It is however in another embodiment possible to realize the walls 11-17 in other materials like plastic, metal or a compound material. The walls have preferably an inner side pointing to the inside of the bee hotel 10 (or inwards) and an outer side pointing the outside of the bee hotel 10 (or outwards). The space included inside the walls is preferably called the interior of the bee hotel 10. The walls are preferably such that the interior of the bee hotel 10 have no openings to the outside so that there is (almost) no light which enters into the interior of the bee hotel 10. In one embodiment, at least one of the walls contain a door to open the bee hotel 10 and to access the interior. In the present embodiment, the door is realized in the front wall 11 or more precisely, the front wall 11 is realized as door to be opened. In particular, the door is realized in the front wall 11 and one side wall 12. A hinge 16 for opening the door could then be arranged between the back wall 13 and the side wall 12 so that the front wall 11 and the side wall 12 open together as door. The hinge 16 can however also be arranged between the front wall 11 and the side wall 12 so that just the front wall 11 or just a part of it opens as door. The door could also be arranged in the back wall 13 so that the interior of the bee hotel 10 is accessed from the back wall 13, i.e. from the side opposing to the entrances 3 of the nest holes 2. The described enclosing wall structure is an advantageous embodiment of the bee hotel structure. However, the bee hotel could also be realized by an open structure, e.g. by a rigid front wall/plate which is open on its back side. In such an embodiment, the nest holes 1 described below could be covered by a light blocking textile.

The bee hotel comprises a plurality of nest holes 1. The term "nest hole" is used in this document in large way including not only the hole in which the solitary bee nests but also the structure around the hole providing the hole. Sometimes the term nest hole is thus used as synonym for a nest of the solitary bee. Each nest hole 1 is configured to allow a solitary bee to place at least one egg (preferably more eggs) in the nest hole 1 and the necessary food or provisions for the egg, larvae and then cocoon to survive. The provisions or food are normally the pollen and/or nectar collected from the plants of the environment. Each nest hole 1 comprises a nest entrance 3 for entering the nest hole 1. The nest hole 1 has a certain diameter. The diameter of the nest hole 1 refers preferably to the diameter of the nest entrance 3 and/or to the diameter of the nest hole 1 behind the nest entrance 3. Preferably, the diameter of the nest hole 1 is constant over more than 50%, preferably more than 70%, preferably more than 80%, preferably more than 90% of the length of the nest hole 1. Preferably, the diameter of the nest entrance 3 and the nest hole 1 behind the nest entrance 3 is the same. The cross-sectional shape of the nest hole 1 is preferably circular. However, other cross-sectional shapes are also possible like ellipsoidal, triangular, rectangular or other forms. In this case, the diameter of such a non-circular nest holes 1 would correspond to the diameter of a circular nest hole 1 which would be used by the same solitary bee, preferably the average diameter of cross-sectional shape of the nest hole 1. The cross-section shape of the nest hole 1 is preferably the cross-sectional shape of the nest entrance 3 and/or of the nest hole 1 behind the nest entrance 3. In one embodiment, the back end of the nest hole 1 is closed. In another embodiment, the back end of the nest hole 1 is open. The length (or also called depth) of the nest hole 1 is preferably larger than 8 centimetres (cm), preferably larger than 10 cm, preferably larger than 12 cm, preferably larger than 13 cm, preferably larger than 15 cm. The length (or also called depth) of the nest hole 1 is preferably smaller than 25 cm, preferably smaller than 22 cm, preferably smaller than 20 cm, preferably smaller than 19 cm, preferably smaller than 18 cm. A nest hole of 17 cm proved to be very effective. If the nest hole 1 is much longer, the number of eggs destroyed for an analysis is not reasonable. If the nest hole 1 is much shorter, the number of eggs and the amount of material might not be sufficient for a proper analysis.

In one embodiment, the plurality of nest holes 1 comprise different groups 2 of nest holes 1. Preferably each group 2 of nest holes comprises a plurality of nest holes. The nest holes of the same group 2 have the same diameter. The nest holes 1 of different groups 2 distinguish in their diameter. Thus, each group 2 of nest holes 1 is characterized or defined by the diameter of its nest holes 1. The plurality of nest holes 1 comprise at least two different groups 2 of nest holes 1, preferably at least three, preferably four different groups 2 of nest holes 1. Obviously, it is also possible to have a bee hotel 10 with more than four different groups 2 of nest holes 1.

The different groups 2 comprise at least a first group 2.1 of nest holes 1.1 and a second group 2.2 of nest holes 1.2. Preferably, the different groups 2 comprise further a third group 2.3 of nest holes 1.3. Preferably, the different groups 2 comprise further a fourth group 2.4 of nest holes 1.4.

The different groups 2 are preferably selected from the following groups 2.

A group 2 with nest holes 1 having a first diameter. The first diameter being smaller than 5 mm, preferably than 4.5 mm. Preferably, the first diameter is larger than 2 mm, preferably than 2.5 mm. Preferably, the first diameter is in the range between 3mm and 4 mm. The formulation "between" shall also include the border values, here of 3mm and 4mm. Thus, this group 2 of nest holes 1 is configured to host the Heriade bees. In the shown embodiment, the first group 2.1 of nest holes 1.1 has the first diameter. In the shown embodiment, the first diameter is 4 mm.

A group 2 with nest holes 1 having a second diameter. The second diameter is preferably larger than the first diameter. The second diameter being preferably smaller than 12 mm, preferably than 10 mm, preferably than 9 mm, preferably than 8 mm, preferably than 7.5 mm, preferably than 7 mm, preferably than 6.5 mm. Preferably, the second diameter is larger than 4 mm, preferably than 4.5 mm, preferably than 5 mm, preferably than 5.5 mm. Preferably, the second diameter is in the range between 5mm and 10 mm, preferably between 5 mm and 7.5 mm, preferably between 5.5 mm and 7 mm. Preferably, the second diameter is 6 mm. Thus, this group 2 of nest holes 1 is configured to host the smaller ones of the Osmia and Megachile bees. In the shown embodiment, the second group 2.2 of nest holes 1.2 has the second diameter.

A group 2 with nest holes 1 having a third diameter. The third diameter is preferably larger than the first diameter and/or second diameter. The third diameter being preferably smaller than 12 mm, preferably than 11 mm, preferably than 10.5 mm, preferably than 10 mm, preferably than 9.5 mm, preferably than 9 mm, preferably than 8.5 mm. Preferably, the third diameter is larger than 4 mm, preferably than 5 mm, preferably than 6 mm, preferably than 7 mm, preferably than 7.5 mm. Preferably, the third diameter is in the range between 5 mm and 10 mm, preferably between 7 mm and 10 mm, preferably between 7.5 mm and 9 mm. Preferably, the third diameter is 8 mm. Thus, this group 2 of nest holes 1 is configured to host larger species of the Osmia and Megachile bees. In the shown embodiment, the third group 2.3 of nest holes 1.3 has the third diameter.

A group 2 with nest holes 1 having a fourth diameter. The fourth diameter is preferably larger than the first diameter and/or second diameter and/or third diameter. Preferably, the fourth diameter is larger than 8 mm, preferably than 9 mm, preferably than 9.5 mm. The fourth diameter is preferably smaller than 15 mm, preferably than 14 mm, preferably than 13 mm, preferably than 12 mm, preferably than 11 mm, preferably than 11.5 mm. Preferably, the fourth diameter is in the range between 9 mm and 16 mm, preferably between 9 mm and 15 mm, preferably between 9 mm and 13 mm. Preferably, the fourth diameter is 10 mm. Thus, this group 2 of nest holes 1 is configured to host the Anthidium bees. In the shown embodiment, the fourth group 2.4 of nest holes 1.4 has the fourth diameter.

Preferably, there are more nest holes 1 in the second group 2.2 or third group 2.3 than in the first group 2.1 or fourth group 2.4. Preferably, there are more nest holes 1 in the third group 2.3 than in the second group 2.2. Preferably, more than 30%, preferably more than 40%, preferably more than 50% of the nest holes 1 are in the third group 2.3. Preferably, less than 70%, preferably less than 60%, preferably less than 55% of the nest holes 1 are in the third group 2.3. In the shown embodiment, 50% of the nest holes 1 are in the third group 2.3. Preferably, more than 10%, preferably more than 15%, preferably more than 20% of the nest holes 1 are in the second group 2.2. Preferably, less than 50%, preferably less than 40%, preferably less than 30% of the nest holes 1 are in the second group 2.2. In the shown embodiment, 25% of the nest holes 1 are in the second group 2.2. Preferably, more than 5%, preferably more than 10% of the nest holes 1 are in the first group 2.1 or the fourth group 2.4. Preferably, less than 25%, preferably less than 20%, preferably less than 15% of the nest holes 1 are in the first group 2.1 or the fourth group 2.4. In the shown embodiment, 12.5% of the nest holes 1 are in the first group 2.1 or the fourth group 2.4.

One, some or all nest holes 1 are preferably removable from the bee hotel 10, preferably from the structure of the bee hotel 10, preferably from the front wall 11. Preferably, one, some or each nest hole 1 can be removed individually from the bee hotel 10 so that the other nest holes 1 can stay in place, when one of the nest holes 1 is removed. Preferably, one, some or each nest hole 1 of each group 2 can be removed (individually) from the bee hotel 10 so that the other nest holes 1 of this group 2 can stay in place, when one of the nest holes 1 of this group 2 is removed. The bee hotel 10 comprises preferably a nest hole support to support the removable nest hole 1 in the bee hotel 10. The nest hole support is preferably a hole or recess, in particular a through-hole in the bee hotel 10, preferably its structure, preferably its front wall 11. The diameter of the through-hole corresponds preferably to the outer diameter of the tube 4 so that the tube 4 of the nest hole 1 can be placed/plugged into the nest hole support by inserting the tube 4 into the through-hole. The hole in the bee hotel 10, in particular in its front wall 11 provides also the nest entrance 3 for the respective nest hole 1.

The nest hole 1 is preferably realised as a tube 4. The tube 4 has preferably a circular cross-section. Even if less preferred, it would also be possible to use other cross-sectional forms like a square. The outer diameter of the tube 4 is preferably such that it fits in (the hole of) the nest hole support. The inner diameter of the tube 4 corresponds preferably to the diameter of the nest entrance 3 of the nest hole 1. In the present embodiment, the front opening of the tube 4 pointing towards the hole in the front wall 11 realises the nest entrance 3. The back-opening of the tube 4, opposed to the front-opening, is preferably closed by a closure means 5. The closure means 5 is made preferably a breathable material which allows an exchange of air and/or humidity. Here the closure means 5 is made of cork plugged-in the back-opening of the tube. The nest holes 1 or tubes 4 extend preferably in the interior of the bee hotel 10. The nest holes 1 or tubes 4 extend preferably with its longitudinal axis perpendicular to the front wall 11 and/or back wall 13 and/or parallel to the bottom wall 15 and/or side walls 12, 14.

In a preferred embodiment, the nest hole 1 or the tube 4 has transparent lateral walls. The nest hole 1 or the tube 4 is preferably made off a transparent material, preferably a transparent plastic like acrylic glass. This has the advantage that the content of the nest hole 1 can be visually analysed without opening the nest hole 1 and thus eventually harming the eggs, larvae, cocoons or bees (alternatives subsequently just referred as larvae for the sake of brevity) enclosed in the nest hole 1. This allows to check, the number of larvae in the nest hole 1. It allows further to check, if the nest hole 1 has some problems like an illness, a fungus, a parasite or something else. Acrylic glass allows further to send the tubes 4 / nest holes 1 via postal service without the risk of destroying the tubes 4 / nest holes 1.

Preferably, there is a minimum distance between two neighbouring nest holes 1. The minimum distance between two neighbouring nest holes 1 is preferably larger than 2 cm, preferably than 3 cm, preferably than 4 cm. The minimum distance between two neighbouring nest holes 1 is in the shown embodiment 5 cm. This allows that the solitary bees of neighbouring nest holes 1 not to disturb each other, but also that the nest holes 1 are easily identifiable for a user.

In a preferred embodiment, each of the plurality of nest holes 1 is identifiable by an identifier. This allows to exchange information about a certain nest hole 1. In the shown embodiment in Fig. 1, each nest hole 1 is identifiable by a combination of a first identifier and second identifier, e.g. a row identifier and a column identifier. Without any limitation of the invention, the row identifier are here chosen as alphabetic letters A, B, C, D, E, F, G, H and the column identifiers as Arabic numbers 1, 2, 3, 4, 5.

The plurality of nest holes 1 is preferably arranged in an ordered manner. Preferably, the plurality of nest holes 1 are arranged in a matrix of rows and columns. Preferably, neighbouring nest holes 1 in the row direction and/or in the column direction have preferably all the same distance, preferably the above described minimum distance. In the shown embodiment, the device for solitary bee nesting 10 comprises at least one row for each group 2 of nest holes 1. Thus, one row would comprise only nest holes 1 of the same group 2. Some groups 2 can comprise only one row of nest holes 1 like the groups 2.1 and 2.4. Some groups 2 can comprise two or more rows of nest holes 1 like the groups 2.2 and 2.3. In the shown embodiment, the row A contains the nest holes 1.1 of the first group 2.1. In the shown embodiment, the rows B and C contain the nest holes 1.2 of the second group 2.2. In the shown embodiment, the rows D to G contain the nest holes 1.3 of the third group 2.3. In the shown embodiment, the row H contains the nest holes 1.4 of the fourth group 2.4.

The bee hotel 10 described is well suited to analyse the solitary bees and/or their collected pollen in the environment around the bee hotel 10 as will be described in more detail below. This analysis allows to make conclusions about the environment around the bee hotel 10, in particular about the biodiversity of the plants growing in the environment and/or about the contamination of the environment. The contamination includes in particular pesticides, heavy metals and others. The environment of the bee hotel 10 corresponds normally to an area corresponding to a radius of 350 meter (m) around the bee hotel 10.

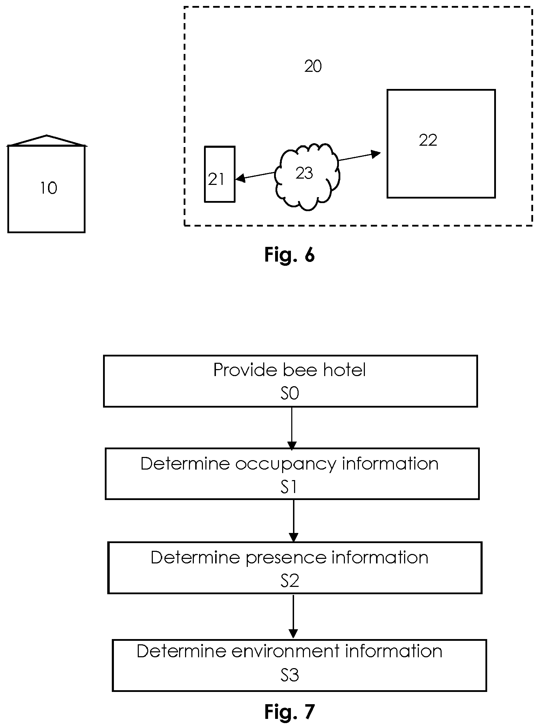

Fig. 6 shows an embodiment of the bee hotel 10 as described above and a processing means 20. Preferably, the processing means 20 comprises a server means 22 (subsequently also called server) and a client means 21 (subsequently also called client device or just client). The server 22 is preferably a server 22 connected over an internet 23 connection to the client means. The client device 21 is preferably a smart phone or tablet with a special client software installed (often also called app). The client device 21 also be a standard personal computer with a special client software installed. However, the client device 21 could also be a normal client computing device like a personal computer, a smart TV, a tablet or smartphone with a browser application through which client interface can be accessed. The client interface accessed through a web browser of a client device 21 or the client software installed on client device 21 are subsequently not distinguished any more and are just called commonly client software. The client software is configured to realize the steps of the first method. The client software provides a user interface for its users. This user interface of the client software is also called user interface of the client device 21. The server 22 is preferably configured to register a plurality of users. Each user having at least one bee hotel 10 can register his/her at least one bee hotel 10. Each of the bee hotel 10 is preferably registered in combination with one or more of the following additional information: its location, its version (big, small), an identifier (to distinguish from other bee hotels 10 of the same user). Each user has preferably a dedicated user space with his registered at least one bee hotel 10 and other registered data. In addition, the user space stores preferably data/information described below for the two methods for analysing solitary bees in the bee hotel 10. Analysing solitary bees is here meant in a large way including all analysis related with the bees. This may include the analysis of the closed nest holes of the bee hotel 10 as in the first method or the analysis of the provision of the solitary bees in the nest holes 1 as in the second method.

In the following, an embodiment of a first method for analysing the solitary bees in the bee hotel 10 is described as shown in Fig. 7.

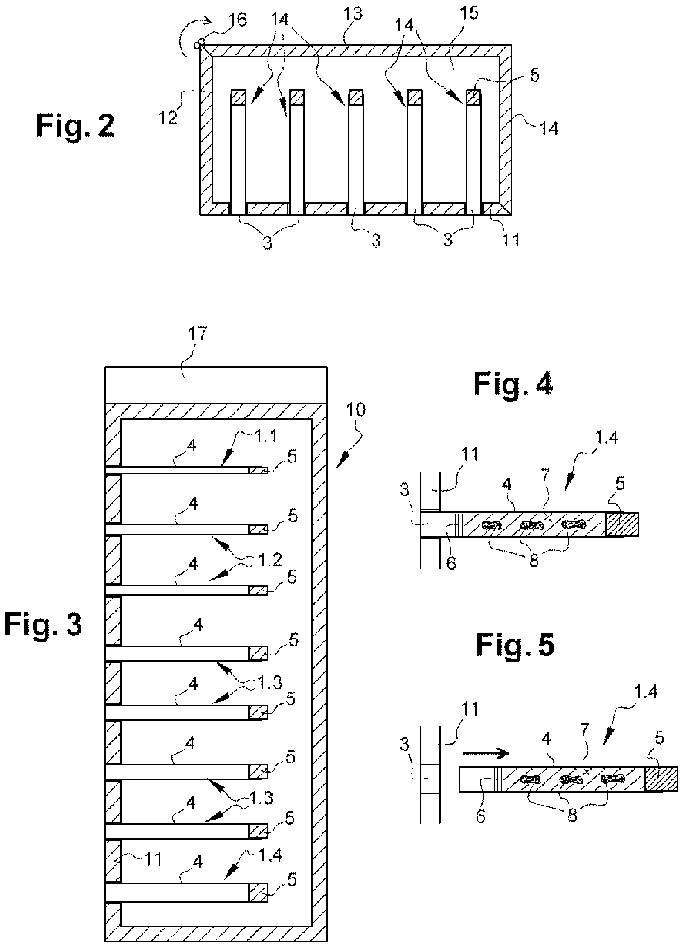

In step S0, the bee hotel 10 is provided in a location. The optimal positioning of the bee hotel 10 with the right amount of sun, the correct height is well known to a person skilled in the art and will not be repeated here. The region around the bee hotel 10 is defined as the environment of the bee hotel 10. The solitary bees living in the environment and looking for a nest to place their eggs will select a suitable one of the nest holes 1. As explained above, the solitary bee selecting one of the nest holes 1 will place its eggs and the collected provisions in one of the nest holes 1 suitable for this solitary bee type. Provisions are the pollen and/or nectar collected by the solitary bee and stored in the nest hole 1 (together with the egg(s). When the nest hole 1 is full, the solitary bee will close the entrance 3 of the nest hole 1 with a nest closure 6. Such a nest hole 1 with a nest closure 6 is called subsequently also full nest hole 1. Fig. 4 shows such a full nest hole 1.

In a step S1, an occupancy information per group of nest holes (short occupancy information) is determined. The occupancy information is any information which allows to determine how many nest holes 1 of each group 2 are full, i.e. are closed by the solitary bee with a nest closure. In a preferred embodiment, the occupancy information per group for all groups is the information about the occupancy state of all nest holes 1. This can be obtained by an information of all nest holes 1 which are full and by definition, the remaining nest holes 1 are empty or vice versa. This allows to determine for each group 2, the number of nest holes 1 which are full by counting the number of nest holes 1 being in the full state in each group 2. Thus, the occupancy information provides the number nfi of full nest holes 1.i per group 2.i. In the shown case, the groups 2.i are i=1, 2, 3, 4.

The occupancy information is preferably received at a user interface at the processing means 20, preferably at the client device 21. In the latter case, the client device 21 sends preferably the occupancy information to the server 22. For example, the user interface of the client device 21 could show nest holes 1 of the bee hotel 10 (registered for the user) and the user can select the ones which are full. In another embodiment, the user could take a photo of the nest holes 1 of the bee hotel 10 with the client device and the processing means retrieves the occupancy information for all the nest holes 1 from the photo of the nest holes 1 by detecting the full nest holes 1. The camera for making the photo is preferably included in the client device 21. The retrieving of the occupancy information from the photo can be made at the server by sending the photo to the server and analysing the photo on the server with image processing means for detecting the full nest holes 1. This image processing step can also be made on the client device and just the retrieved occupancy information is sent to the server. The occupancy information can also be received differently at the processing means or the client device, e.g. the numbers nfi can be inserted in a user interface for each group 2.i. The occupancy information is preferably sent to the server (in form of the photo of the bee hotel 10 or the occupancy information about each nest hole 1 or the numbers nfi or anything else allowing to retrieve the number nfi for each group 2.i. In a less preferred embodiment, the occupancy information can also be send by email or by postal mail to an analysis centre where the occupancy information is inserted in a processing means.

The occupancy information is preferably converted in one or more of the following relative occupancy information, preferably all of them: occupancy rate rt of total number of nest holes 1, occupancy rate ri of each group 2.i of nest holes 1.i and a distribution rate di of full nest holes 1.i per group 2.i. For the following calculations, we define the following parameters: The total number n of nest holes 1. The total group number ni of nest holes 1.i of the respective group 2.i with i being an identifier for the groups between 1 and N, wherein N is the total number of different groups. N in the shown embodiment is 4. The sum of all ni for all groups 2.i with i=1, ..., N results in the total number n. The number nfi of full nest holes 1.i in each group 2.i. The total number of full nest holes nf. The total number of full nest holes nf corresponds to the sum of the numbers nfi of all groups 2.i with i=1, ..., N. The occupancy rate rt of total number of nest holes 1 can be obtained for example by the total number nf of full nest holes 1 divided by the total number n of nest holes 1. The occupancy rate ri of a group 2.i of nest holes 1.i can be obtained for example by the number nfi of full nest holes 1 of group 2.i divided by the total number ni of nest holes 1.i of this group 2.i. The sum of all ri should correspond to rt. The distribution rate di of full nest holes 1 for group 2.i can be obtained by the number nfi of full nest holes 1.i of group 2.i divided by the total number of full nest holes nf. The sum of the distribution rates di of all groups 2.i should sum up to 100%. The converted occupancy information comprises preferably the occupancy rate ri for each group 2.i and/or the distribution rate di for each group 2.i.

In a step S2, a presence information about the presence of different solitary bee species in the environment (short presence information) is determined/computed based on the occupancy information of each group 2.i. The presence information about the presence of different solitary bee species in the environment is preferably determined based on the converted occupancy information of each group 2.i. The known diameter of the nest entrance 3 of a group 2.i of nest holes 1.i allows to determine the bee species living in the nest holes 1.i of this group 2.i. Thus, the bee species using the nest holes 1.i of the group 2.i are known due to the known diameter of the nest entrance 3. The occupancy information, in particular the occupancy rate ri and/or the distribution rate di of the group 2.i gives an indication about the presence of the bee species for which the nest entrance 3 of this group 2.i is designed. The occupancy rate ri gives rather an absolute information, if there are many, average or few bees of this species in the environment. The distribution rate di of the group 2.i gives rather a relative information of how many bees of this species are present in the environment relative to other bee species (present in the bee hotel 10).

The nest holes 1 of some groups 2 are used by different bee species at different times of the year. Therefore, in a preferred embodiment, the time when the occupancy information for the groups 2 of the bee hotel 10 is determined (occupancy sample time) is determined together with the occupancy information. This can be the time, when the occupancy information is inserted in the user interface of the client device 21 or a time inserted in the user interface. The occupancy sample time is preferably the same for all groups 2.i, i.e. the occupancy information for all the groups 2 are taken at the same moment, i.e. the occupancy sample time. The presence information is preferably determined/computed based on the occupancy information of each group 2.i, the diameter of the nest entrances of each group 2.i and the occupancy sample time. This allows to distinguish between two bee species using the same group 2.i of nest holes 1.i at different times of the year. Thus, the bee hotel 10 with four groups 2 allows to distinguish even more than 4 bee species and to determine thus the presence information in the environment about more than 4 bee species by repeating the process at a second occupancy sample time.

In addition, information about the nest content (nest content information) can help to distinguish between different bee species preferring the same group 2 of nest holes 1 at the same time of the year. Preferably, the nest content information is retrieved for each full nest hole 1 or only for each full nest hole 1 of the group(s) 2 for which at the occupancy sample time there are more than one bee species which can nest in the nest holes 1 of this group or of these groups. The nest content information can comprise one or more of the following: Colour of the provisions enclosed in the full nest hole 1, information about the nest closure 6 and/or the department walls, the depth of the nest closure 6. The colour of the provisions enclosed can be checked through the transparent nest holes 1. The depth of the nest closure 6, i.e. the distance of the nest closure 6 from the nest entrance 3 could be checked from the nest entrance 3 or through the transparent walls of the nest holes 1. The information about the nest closure 6 and/or the department walls could be their colour, or the material used. This could be check from the nest entrance 3 or through the transparent walls of the nest hole 1. The presence information is preferably determined/computed based on the occupancy information of each group 2.i, the diameter of the nest entrances of each group 2.i and the nest content information (and preferably based on the occupancy sample time). Thus, for groups 2 of nest holes 1 for which there is a doubt about the bee species in the nest hole 1, the content information can help to identify the bee species of the nest hole 1. This is possible, because different bee species prefer different plants which causes a different provision colour. This is also possible because they use different materials for the department walls and the nest closure 6 causing different colours and materials of them and/or because they arrange the nest closure at different depths. This is further possible based on the larvae contained in the nest hole 1. The nest content information is preferably received from the client device. Some information could be (automatically) retrieved from the photo of the nest entrances 3 of the bee hotel 10 like the colour or depth of the nest closure 6 of the nest holes 1. The nest content information could also be inserted by a user interface of the client device 21. The client software could also request the user to add the nest content information just for the nest holes 1, where it is necessary because there might be a conflict of two or more bee species which could nest in the nest hole 1. Thus, the nest holes 1.i of one group 2.i (at a certain occupancy sample time) could be subdivided in at least two sub-groups belonging each to a distinct bee species, wherein the full nest holes 1.i of this group 2.i are associated to the respective bee species based on the nest content information. In one embodiment, the sub-groups of a group 2 could be considered as own groups for the purpose of calculation of rates above. In another embodiment, the sub-groups of a group 2 are not individually considered as own groups for the purpose of calculation of rates above.

The presence information comprises preferably one or more of : a general presence information of solitary bees in general in the environment (determined preferably based on the occupancy rate rt of total number of nest holes 1), the species specific (species group specific) presence information (determined based on the occupancy rate ri of the respective group 2.i of nest holes 1.i belonging to the respective bee species and a relative species specific (or species group specific) presence information (determined based on the distribution rate di of full nest holes 1.i of the group 2.i belonging to the respective bee species).

The step S2 as described here is preferably performed by the processing means 20, preferably by the server 22.

Preferably, the method comprises a further step S3 in which a further information about the environment (environment information) is determined/computed based on the presence information. The environment information comprises preferably a plant presence information and/or environmental pollution information. The plant presence information gives an indication about plants present in the environment, thus about the biodiversity of the plants in the environment. This is due to the fact that different bee species prefer pollen of different plants. Thus, the presence information of different bee species allows a conclusion about the presence of the plants preferred by these bees. In addition, the presence information gives an indication about the environmental pollution in the environment. Some bee species are sensible to environmental pollution so that the presence of different bee species can also be an indicator for the environmental pollution of the environment of the bee hotel 10. Environmental pollution includes in particular the quantity of pesticides in the environment.

The environment information is preferably sent to the user, preferably to the client software of the client device.

The steps S1 to S3 are preferably repeated at different occupancy sample times of the year. Preferably, an occupancy sample period is given to a user so that the occupancy information is taken at an occupancy sample time within the given occupancy sample period. Thus, the occupancy sample time is a reasonable and meaningful time of the year and the occupancy information from different bee hotels 10 are taken at the same time and are comparable. The given occupancy time period for taking the occupancy information could be preferably a certain week of the year. The occupancy sample time or period is preferably chosen to be at the mid to end of the flying period of at least one solitary bee which would select one of the nest holes 1 of the bee hotel 10. The occupancy sample period is preferably communicated to the user via the client software. However, it is also possible to communicate the occupancy sample period to the user with a manual or instructions.

Preferably, a plurality of bee hotels 10 are placed at different locations. Preferably, the steps S1 to S3 are repeated for each bee hotel 10 (preferably in the same occupancy sample period). Preferably, the server collects the occupancy information and/or the presence information and/or the environment information of each bee hotel 10 at the different locations. A map with the one or more of the mentioned information can be realized by placing the respective information on the respective locations of the bee hotel 10 on the map.

The steps S1, S2 and/or S3 are preferably (at least partly) performed by the processing means 20 as explained above. However, it is also possible to perform the method without the help of a processing means 20.

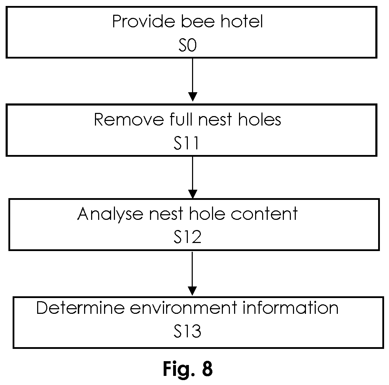

Fig. 8 shows an embodiment of a second method for analysing the solitary bees in the bee hotel 10.

The step S0 of providing a bee hotel 10 in the environment is as explained above and will not be described again.

In a step S11, at least one of the full nest holes 1 of the bee hotel 10 is removed. This is realized by removing the nest hole 1 or the tube 4 out of the nest hole support of the bee hotel 10. In the shown embodiment, the nest holes 1/ tubes 4 are arranged in the front wall 11 and door so that the nest holes 1 can be accessed better, when the door is open. In the shown embodiment, the hinge 16 for opening the door is arranged between the back wall 13 and the side wall 12 so that the front wall 11 and the side wall 12 open together as door. Thus, the nest holes 1 can be arranged closer to the opposite side wall 14 as the back ends of the tubes 4 swing less in the direction of the side wall 14. However, for other types of bee hotels 10 other methods of removing the nest holes 1 are possible. The removed nest hole 1 needs not to be closed as it is naturally closed by the solitary by through a nest closure. Preferably, a plurality of full nest holes 1 is removed. Preferably, at least one full nest hole 1 of each group 2 (which comprise a full nest hole 1) is removed.

In step S12, the content of the at least one removed nest hole 1 is analysed. Preferably, the at least one removed nest hole 1 is sent to a laboratory for the analysis, preferably via postal mail. The analysis is performed for example by microscopy, DNA analysis, chromatography, spectrometry, or other. The DNA analysis can be for example DNA sequencing of the content of the at least one removed nest hole 1. The analysis is performed to identify the plants of the pollen and/or nectar stored in the removed nest hole 1 and/or to identify contaminants in the content of the removed nest hole 1. The contaminants can be chemical contaminants like heavy metals or pesticides. The contaminants can also be biological contaminants like parasites or a fungus.

In step S13, an environment information is determined based on the analysis result of step S12. The environment information is preferably an information about the plants or the biodiversity of the plants in the environment around the bee hotel 10 and/or an information about the environmental pollution. The information about the environmental pollution is preferably determined based on the contaminants detected in the content of the removed at least one nest hole 1 in the analysis. The information about the plants is preferably determined based on the plants identified from the analysed pollen and/or nectar of the removed at least one nest hole 1. The step S13 is preferably performed by a server receiving the analysis result of step S12.

The analysis described in the second method works also with only one group of nest holes 1. However, the analysis of two or more nest holes 1 of different groups 2 allows to have a more diversified pollen and/or nectar sample reflecting better the plants in the environment around the bee hotel 10 as different bee species prefer each different plants.

The environment information is preferably sent to the user, preferably to the client software of the client device.

The steps S11 to S13 are preferably repeated at different content sample times of the year. Thus, the Preferably, a content sample period are given to a user so that the nest holes 1 are removed from the bee hotel 10 at a content sample time within the given content sample period. Thus, the content sample time is a reasonable and meaningful time of the year and the nest holes 1 from different bee hotels 10 are removed at the same time and are comparable. The given content time period for removing the at least one nest hole 1 could be preferably a certain week of the year. The content sample time or period is preferably chosen to be at the mid to end of the flying period of at least one solitary bee which would select one of the nest holes 1 of the bee hotel 10. The content sample period is preferably communicated to the user via the client software. However, it is also possible to communicate the content sample period to the user with a manual or instructions sent with the nest holes 1.

Preferably, a plurality of bee hotels 10 are placed at different locations. Preferably, the steps S11 to S13 are repeated for each bee hotel 10 (preferably in the same content sample period). Preferably, the server collects the analysis results and/or the environment information of each bee hotel 10 at the different locations. A map with the one or more of the mentioned information can be realized by placing the respective information on the respective locations of the bee hotel 10 on the map.

The environment information of step S3 and/or S13can also contain recommendations to improve the environment for solitary bees. The environment information can further comprise a recommendation how to improve the environment (recommendation information). The recommendation information could include recommendation on how to increase the presence of bees in general or of a certain bee species. The recommendation can be planting in the environment certain plants which bees in general or the specific bees whose presence shall be increased, like. The recommendation can be planting in the environment certain plants which bees in general or the specific bees whose presence shall be increased, like. The recommendation could also be to reduce certain pesticides in the environment. The recommendation information could also how to increase the biodiversity. Therefore, the recommendation information can be planting in the environment certain plants which are currently missing for a good biodiversity. In one embodiment, the client can select among different types of recommendation information, e.g. recommendation information how to increase missing bee types, recommendation information how to increase the biodiversity of plants, ....

Preferably, the environment information of S3 and/or S13 or the presence information of S2 sent to the user or the client device of the user contains further comparison information. The comparison information is preferably retrieved from the environment information or presence information from at least one bee hotel 10 nearby, e.g. the bee hotel 10 being within a certain radius of the bee hotel 10 to whose user the information is sent or of a number of bee hotels 10 being closest to the bee hotel 10. Thus, the user has an incentive to improve the situation to get better results than other bee hotels 10 around.

The bee hotel 10 as described above and the methods described above have many applications.

First, the bee hotel 10 can be placed in private gardens or in schools to teach about solitary bees. In addition, the users can learn something about their environment and can maybe improve the environment based on the presence information or environment information received.

Second, the bee hotel 10 can also have a professional context. The bee hotel 10 allows to collect the pollen of a small environment around the bee hotel 10 and allows thus to make conclusions about a small and well defined area around the bee hotel 10 (normally a radius of 350 m). An analysis of pollen of a beehive of honeybees have normally pollen of a radius of 1500 m and might mix the environment information of the property of the user with neighbouring environment information. In addition, it might be difficult to detect the origin of an environmental pollution in such a large area. In the following, two professional applications will be explained.

A water company is interested in surveying an area from which the water is retrieved. This is traditionally done by getting samples of the retrieved water. However, many contaminants of the environment get only after long times into the ground water and thus to the water used. Thus, a contamination of the environment is detected only, when it is already to late. Therefore, the present invention allows to place the bee hotel 10 in the relevant area. The solitary bee of the bee hotel 10 collect pollen from the area of interest and the collected pollen are stored in the nest holes 1 of the bee hotel 10. By analysing the pollen of the removed nest holes 1, contaminants in the environment like pesticides, heavy metals, etc. can be detected at a much earlier stage. In addition, the pollen collected by the solitary bees all over the environment are much more representative than the water samples at one or two spots in the area. Due to the small range of the solitary bees, the origin of the contamination can also be quickly found. The water company can intervene early and avoid that the contaminants get into the ground water.

The system can also be of interest to control biological farmers that they are not using pesticides. Many more applications are possible.

It should be understood that the present invention is not limited to the described embodiments and that variations can be applied without going outside of the scope of the claims.

## Claims

1. Method for analysing solitary bees in an environment comprising the following steps:
providing a device for solitary bee nesting (10) in the environment (S0), wherein the device for solitary bee nesting (10) comprises a plurality of nest holes (1), wherein the plurality of nest holes (1) comprise at least two different groups (2) of nest holes (1), wherein each group (2) of nest holes (1) comprise a plurality of nest holes (1), wherein each nest hole (1) of the same group (2) has the same diameter, wherein the nest holes (2) of different groups (2) distinguish in their diameter,
determining an occupancy information per group (2) of nest holes (1) (SI);
determining a presence information about the presence of different solitary bee species in the environment based on the occupancy information (S2).

2. Method according to the previous claim, wherein the different solitary bees comprise at least one bee species per group, wherein the information about the presence of the at least one solitary bee species per group is determined based on the occupancy information of this group.

3. Method according to one of the previous claims, wherein the occupancy information per group of nest holes results from a certain occupancy sample time, wherein the information about the presence of different solitary bee species is determined further based on the certain occupancy sample time.

4. Method according to one of the previous claims, wherein the occupancy information of a group of nest hotels comprises the occupancy state of each nest hole of this group.

5. Method according to one of the previous claims, wherein a processing means (20) receives the occupancy information per group of nest holes and determines the presence information.

6. Method according to the previous claim, wherein the processing means (20) comprises a client means (21) and a server means (22), wherein the client means (21) receives the occupancy information per group of nest holes, wherein the server means (22) determines the presence information based on the occupancy information received at the client means (21).

7. Method according to the previous claim, wherein the client means (21) comprises a camera, wherein the occupancy information per group of nest holes (1) is received from an image of the plurality of nest holes (1)captured by the camera of the client means (21).

8. Method according to claim 6, wherein a user enters the occupancy information per group of nest holes via a user interface of the client means (21).

9. Method according to one of the previous claims, comprising the step of determining an environment information about the biodiversity and/or the environmental pollution (S3) based on the presence information.

10. Method according to one of the previous claims, comprising the steps of:
analysing the content of at least one of the nest holes; and
determining the presence information and/or the environmental information further based on the analysed content.

11. Device for solitary bee nesting for solitary bees comprising a plurality of nest holes, wherein the plurality of nest holes comprise at least two different groups (2) of nest holes (1), wherein each group (2) of nest holes (1) comprise a plurality of nest holes (1), wherein each nest hole (1) of the same group has the same diameter, wherein the nest holes (2) of different groups (2) distinguish in their diameter.

12. Device for solitary bee nesting according to the previous claim, wherein the plurality of nest holes (1) comprises preferably four different groups (2) of nest holes (1).

13. Device for solitary bee nesting according to one of the previous claims, wherein the at least two groups have two or more different diameters of their nest holes (1) selected each from a different one of the following diameter ranges: a first diameter range smaller than or equal to 5 mm, a second diameter range between 5 mm and 8 mm, a third diameter range between 7 mm and 10 mm and a fourth diameter range larger or equal than 9mm.

14. Device for solitary bee nesting according to one of the previous claims, wherein at least some, preferably all of the nest holes are removable.

15. System comprising a device for solitary bee nesting according to one of the claims 11 to 14 and a processing means, wherein the processing means is configured to
receiving an occupancy information per group of nest holes; and determining a presence information about the presence of different solitary bee species in the environment based on the occupancy information.
